# DEMANDE DE BREVET EUROPEEN

(11) **EP 1 535 885 A1**
(43) Date de publication de la demande: **01.06.2005**
(21) Numéro de dépôt: 03104457.1
(22) Date de dépôt: 28.11.2003
(51) Int. Cl.: C03C 17/00, C03C 17/36, C03C 17/22

(54) **Vitrage comportant un élément lumineux**

(71) Demandeur: GLAVERBEL, 1170 Bruxelles (BE)
(72) Inventeur: Lefêvre, Hugues, 6040 Jumet (BE)
(74) Mandataire: Farmer, Guy

(57) **Abrégé**

L'invention concerne un vitrage monolithique ou feuilleté, en particulier un vitrage pour automobile, comportant un élément lumineux constitué de diodes électroluminescentes (LED) (8,18).

En particulier, l'élément lumineux est constitué d'une enveloppe commune (24) pour un ensemble de puces (20) constituant les LED. L'enveloppe est esthétiquement adaptée s'intégrer au vitrage et permet de réaliser de manière économiquement rentable des éléments lumineux suffisamment puissants et homogènes pour l'éclairage intérieur d'un véhicule automobile.

## Description

La présente invention concerne des vitrages, en particulier pour automobiles, comportant au moins un élément lumineux.

La surface des vitrages est de plus en plus importante dans les véhicules. Les toits automobiles en verre, de grande dimension sont de plus en plus courants. Pour l'éclairage intérieur de l'automobile, il est d'usage d'utiliser un plafonnier avec boîtier opaque et des connexions électriques par fils. Avec des toits automobiles en verre, il se pose le problème de disposer d'un éclairage intérieur qui ne perturbe pas l'esthétique du toit transparent.

L'invention consiste à utiliser des diodes électroluminescentes (LED) comme éléments lumineux disposés sur ou dans un vitrage. Par vitrage, on entend tout aussi bien le toit que le pare-brise ou tout autre vitre. Or, les LED sont de petites dimensions et chacune ne fournit qu'un flux de lumière relativement limité. Il est donc nécessaire d'employer un grand nombre de LED pour obtenir une luminosité suffisante. Il n'est pas aisé de réaliser un éclairage intérieur automobile, apte à être disposé sur un des vitrages, fournissant une luminosité suffisante et homogène et qui soit économique à réaliser.

Il a été découvert qu'il est possible d'obtenir un éclairage d'intérieur automobile particulièrement esthétique qui puisse se disposer sur un vitrage monolithique ou dans un vitrage feuilleté et qui soit aisé à réaliser.

La présente invention a pour objet un vitrage comportant au moins un élément lumineux constitué de diodes électroluminescentes (LED).

Suivant les applications recherchées, on utilisera au choix, des feuilles de verre clair, coloré, ou partiellement ou totalement maté, sablé, sérigraphié ou tout autre type de feuille de verre appropriée ou tout autre substrat transparent approprié tel que du polycarbonate. Suivants le type de substrat utilisé, les conducteurs électriques peuvent être des conducteurs traditionnels (fins conducteurs métalliques soudés aux composants) qui peuvent être masqués, pour des raisons esthétiques, par l'utilisation d'un substrat approprié, par exemple une feuille de verre maté ou sablé.

Suivant un autre mode de réalisation, le circuit de connexion des LED est réalisé à l'aide d'une couche conductrice déposée sur le substrat dans laquelle des zones ont été isolées du reste de la couche par de fines bandes non conductrices.

Les couches conductrices transparentes, parfois légèrement colorées, déposées sur du verre, sont déjà connues pour leurs propriétés isolantes et/ou anti-solaires.

Les couches conductrices typiques sont par exemple des couches à base d'oxyde métallique dopé dont l'épaisseur est généralement comprise entre 0.02 et 1 µ, de préférence entre 0.2 et 0.5 µ et dont la résistance de surface peut varier entre 5 et 80 Ω/carré, de préférence entre 10 et 30 Ω/carré. De telles couches comprennent par exemple de l'oxyde de zinc dopé à indium ou à l'aluminium, de l'oxyde d'étain dopé au fluor ou de l'oxyde d'indium dopé à l'étain (généralement connu sous l'abréviation ITO).

D'autres couches conductrices typiques sont des couches à base d'argent. Ces couches conductrices peuvent être composées d'une, de deux, voire de trois couches d'argent (ou de tout autre matériau conducteur tel que Cu, Au, ou TiN), généralement séparées par des couches de diélectrique. Pour des couches comprenant une épaisseur totale de matériau conducteur comprise entre 10 et 30 nm, la résistance de surface peut atteindre des valeurs très faibles comprises entre 1 et 5 Ω/carré, de préférence entre 2 et 3 Ω/carré.

Cependant, toute autre couche même plus faiblement conductrice pourrait convenir pour réaliser les connexions électriques entre les LED. La tension à appliquer devra cependant être augmentée si la résistance de la couche est plus importante.

Il est donc possible de réaliser des pistes conductrices alimentant les LED en déposant une couche conductrice à propriétés anti-solaire et/ou thermiquement isolante sur la majeure partie du vitrage et en éliminant ou modifiant ensuite la couche conductrice sur de fines bandes, par exemple par laser. Pour déposer la couche conductrice, l'une ou l'autre des techniques connues peut être utilisées, par exemple la pulvérisation cathodique sous vide ou le dépôt pyrolytique en phase vapeur.

Il est également envisageable de réaliser, en une seule étape, le dépôt de la couche conductrice et des pistes conductrices par l'utilisation de masques appropriés, éventuellement réalisé par sérigraphie.

Les fines bandes sans couche ont, de préférence, une largeur comprise entre 0.01 et 3 mm, de préférence comprise entre 0.05 et 1.5 mm, et de manière encore préférée entre 0.1 et 0.8 mm. De cette manière, on peut obtenir des connexions électriques quasiment invisibles même si la couche conductrice présente une légère coloration.

Les LED sont généralement constituées d'une puce semi-conductrice, d'éléments de connexion électrique et d'une enveloppe dont les fonctions sont multiples (protection de l'oxydation et de l'humidité, dissipation de la chaleur, support mécanique).

Cette enveloppe peut présenter des dimensions suffisamment petites pour être insérée dans un vitrage feuilleté. Au vu du faible flux lumineux fourni par les LED actuelles, il serait nécessaire d'en disposer un grand nombre pour obtenir un éclairage intérieur automobile satisfaisant, et de réaliser un grand nombre de connexions électriques, ce qui rendrait le procédé de fabrication onéreux.

Il est possible de disposer de LED dont le flux lumineux est plus important mais, dans ce cas, l'intensité lumineuse de chaque LED est très important, ce qui génère alors des problèmes de surchauffe et/ou d'éblouissement.

Selon un mode de réalisation avantageux de l'invention, plusieurs puces sont disposées dans une enveloppe commune dont les dimensions sont telles que sa largeur et/ou sa longueur sont au moins 10 fois plus grandes que son épaisseur, de préférence 20 fois plus grande et de manière encore préférée 40 fois plus grande.

Cette enveloppe est de préférence réalisée dans une matière transparente ou esthétiquement compatible avec le vitrage utilisé. Il est également de préférence réalisé dans une matière suffisamment souple pour lui permettre d'épouser les courbures du vitrage. Il peut avantageusement comprendre une surface diffusante qui permet de lisser la lumière émise par les différentes puces.

En particulier, l'enveloppe comporte de 5 à 100 puces, de manière préférée de 10 à 50 puces, et de manière encore préférée de 15 à 40 puces.

Cette enveloppe permet de réaliser un éclairage fournissant de 10 à 500 lumens, de manière préférée de 20 à 250 lumens et de manière encore préférée de 30 à 100 lumens de manière économique, c'est-à-dire sans devoir procéder au collage d'un grand nombre de LED et sans devoir réaliser un grand nombre de connexions électriques.

De manière préférée, l'enveloppe présente une longueur et/ou une largueur comprise entre 5 et 100 mm, de préférence entre 10 et 75 mm et de manière encore préférée entre 20 et 50 mm.

L'épaisseur de l'enveloppe est de préférence inférieure ou égale à 3 mm, de manière préférée inférieure à 2 mm, inférieure à 1.2 mm, inférieure à 1 mm et de manière encore plus préférée comprise entre 0.1 et 0.7 mm.

Une telle enveloppe permet de ne réaliser que 2 contacts électriques verre/ enveloppe si la luminosité fournie par l'ensemble des puces atteint environ 50 lumens.

Selon un mode particulier de réalisation de l'invention, le vitrage comporte un interrupteur de type capacitif, actionnant l'alimentation de l'élément lumineux. Cet interrupteur est constitué d'une zone de la couche conductrice, isolée du reste de la couche conductrice, et fonctionnant comme la sonde d'un circuit capacitif.

Ceci permet de réaliser un interrupteur quasiment invisible, qui fonctionne par simple contact du doigt sur la zone isolée et qui peut être disposé à proximité de l'élément lumineux sans rompre l'esthétique du vitrage.

Selon un mode préféré de réalisation de l'invention, le vitrage est un vitrage feuilleté qui comporte deux feuilles de verre accolées à l'aide d'un ou de plusieurs intercalaires thermoplastiques (généralement de type polyvinylbutyral (PVB)), les LED et leur circuit de connexion étant insérées entre les deux feuilles de verre.

Dans ce mode de réalisation, les couches peuvent être déposées soit sur la surface intérieure d'une ou de l'autre feuille de verre, soit sur le film de PVB intercalé entre les deux feuilles de verre.

Les LED et en particulier leur enveloppe ou « package » devront résister aux conditions de température et de pression de l'étape d'autoclavage nécessaire pour la fabrication de feuilletés (de l'ordre de 10 à 15 bars et 80 à 150°C pendant 1 à 4 heures).

Lors qu'il est inséré dans un feuilleté, l'enveloppe ne doit pas nécessairement répondre aux exigences de protection contre l'humidité et l'oxydation qui sont généralement exigées pour les enveloppes des LED classiques et pour une utilisation sur un verre simple.

L'invention ne se limite cependant pas à ce type de vitrage, et peut être réalisée avec une feuille de verre simple, de préférence trempée selon les techniques connues.

Dans le cas d'un vitrage monolithique, les LED et leur circuit de connexion sont disposés sur la face intérieure du verre. Dans ce cas, l'épaisseur des LED et de leur enveloppe est moins importante.

L'homme du métier pourra prévoir tout type de disposition des connexions électriques pour connecter les LED ou les puces à l'intérieur de l'enveloppe, au choix, en série, en parallèle ou prévoir une disposition mixte qui a l'avantage de fournir une luminosité homogène.

La présente invention est illustrée par les exemples de réalisation spécifique ci-dessous, ces exemples n'étant pas limitatifs, et référence étant faite aux fig. dans lesquelles,
les fig. 1 à 4 représentent, en coupe, un vitrage feuilleté comportant un élément lumineux réalisé avec une ou plusieurs LED traditionnelles ;
les fig. 5 et 6 représentent un vitrage feuilleté comportant un élément lumineux réalisé avec des LED particulières;
la fig. 7 représente un vitrage trempé comportant un élément lumineux réalisé avec des LED particulières ;
La fig. 8 représente une vue d'ensemble d'un pare-brise comportant, dans sa partie supérieure, un élément lumineux ainsi qu'une zone pour l'allumage et l'extinction de l'élément lumineux.

### Exemple 1 :

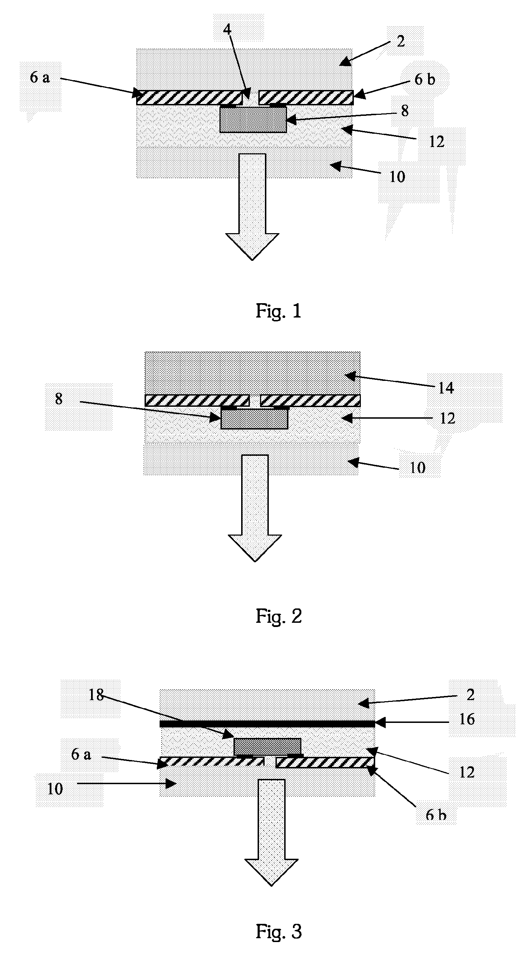

La fig. 1 représente un vitrage feuilleté réalisé comme suit. Une couche conductrice 6 (conductivité d'environ 2 Ω/carré) a été déposée sur une feuille 2 de verre sodo-calcique clair de 2.1 mm d'épaisseur, destinée à être la feuille de verre extérieure du vitrage. La couche conductrice 6 est éliminée au laser sur de fines bandes 4 d'environ 0.15 mm de large, de manière à délimiter des pistes conductrices 6a, 6b. Des LED 8 dont les dimensions extérieures ne dépassent pas 0.6 mm d'épaisseur sont collées de part et d'autre d'une fine bande 4 avec une colle conductrice. Des colles conductrices typiques sont par exemple des colles à l'argent.

La feuille de verre 2 est alors laminée, face revêtue vers l'intérieur, avec une deuxième feuille 10 de verre sodo-calcique clair de manière traditionnelle, en intercalant une feuille thermoplastique double 12 de 0.72 mm d'épaisseur totale.

Pour l'exemple illustré, la colle doit être choisie pour sa résistance aux hautes températures et pression nécessaire pour réaliser le vitrage feuilleté. Elle doit aussi être choisie en fonction de sa viscosité de manière à éviter qu'elle ne se répande dans la bande isolante 4 lors du laminage du feuilleté.

Le flux lumineux émis par la LED est indiqué par la flèche. Il est orienté vers la feuille de verre intérieure 10 du vitrage.

### Exemple 2 :

La fig. 2 représente un vitrage feuilleté, similaire à celui de l'exemple 1, mis à part que la feuille de verre extérieure est une feuille de verre coloré 14. Ce type de verre feuilleté est particulièrement bien approprié pour réaliser un toit automobile. Sa transmission lumineuse (TL) peut ainsi être abaissée à 14% et sa transmission énergétique (TE) à 11%.

### Exemple 3 :

La Fig. 3 représente un vitrage feuilleté comportant une feuille de verre extérieure 2 constituée de verre clair sodo-calcique. Une couche de décoration opaque 16 est déposée sur une partie de la surface intérieure de la feuille de verre 2. La couche conductrice 6 est, dans ce cas, déposée sur la feuille de verre intérieure 10, sur sa face tournée vers intérieur du vitrage feuilleté. Des pistes conductrices 6a, 6b sont réalisées, comme aux exemples précédents, par l'élimination de la couche sur de fines bandes 4. Des LED 18, de type « reverse », c'est-à-dire prévues pour être collées par leur côté émettant la lumière, sont collées de part et d'autre des bandes 4, sur la feuille de verre intérieure 10 du vitrage.

Ce mode de réalisation permet de rendre le dispositif lumineux invisible du côté extérieur du vitrage puisque les LED 18 sont situées derrière la couche opaque 16 du vitrage.

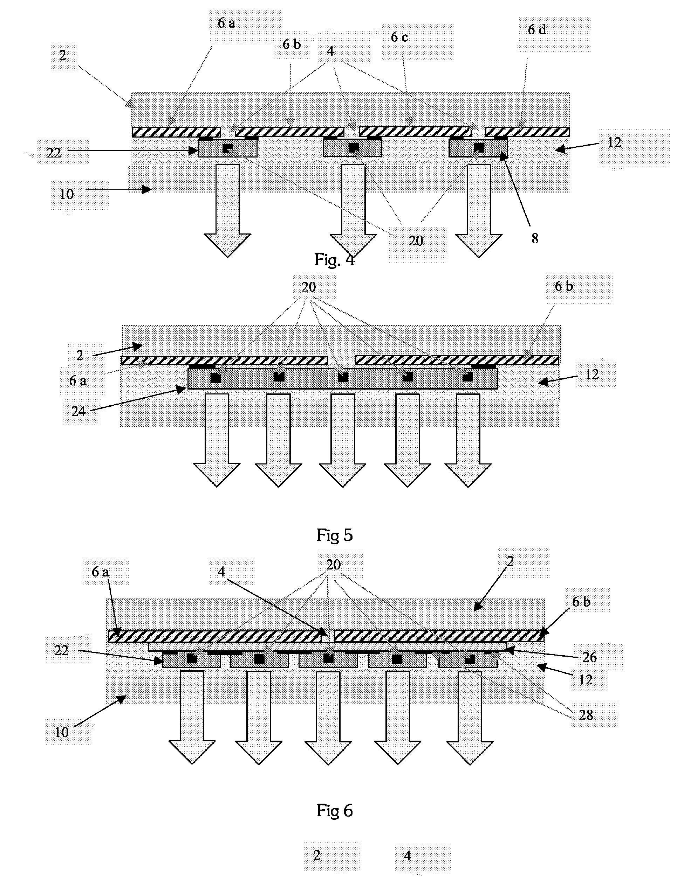

La fig. 4 représente le même mode de réalisation qu'à la fig. 2. Les LED 8 sont représentées avec une puce semi-conductrice 20 chacune encapsulée dans une enveloppe 22. Des pistes conductrices distinctes 6a, ...6 d sont nécessaires pour relier chaque LED 8.

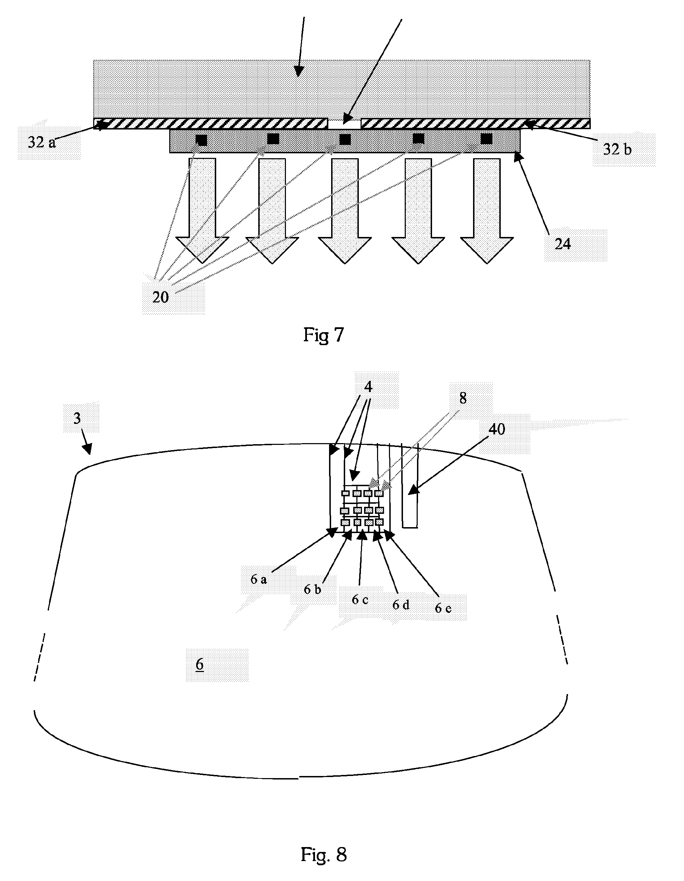

La fig. 8 représente une vue d'ensemble d'un pare-brise 34 comportant un élément lumineux constitué, dans le cas illustré schématiquement, de douze LED 8. Des pistes conductrices 6 a, 6 b, ... 6 e, délimitées par des bandes 4 où la couche 6 a été éliminée, relient chacune des LED 8 en série. Dans le cas illustré, 3 séries de 4 LED 8 sont connectées en parallèle.

La fig. 8 montre également une zone conductrice 40 délimitée par des bandes isolantes 4. Celle- ci fonctionne comme une touche capacitive et permet l'allumage et l'extinction de l'élément lumineux.

### Exemple 4 :

Le vitrage représenté à la fig. 5 comporte comme à l'exemple 1 : une feuille de verre extérieure 2 revêtu d'une couche conductrice 6, un intercalaire thermoplastique 12, et une feuille de verre intérieure 10. L'élément lumineux est réalisé par l'utilisation d'une LED particulièrement adaptée pour cet usage et qui comporte une pluralité de puces semi-conductrices 20 dans une seule enveloppe 24. Ce mode de réalisation nécessite de réaliser moins de pistes conductrices, voir uniquement 2 pistes conductrices 6a, 6b si l'intensité lumineuse fournie par les puces semi-conductrices 20 encapsulées dans une seule enveloppe 24 est suffisante pour l'application recherchée. Ce mode de réalisation permet également de réaliser des bandes 4, entre les pistes conductrices 6a, 6b, plus larges et évite les risques de fluage de la colle dans les bandes isolantes.

### Exemple 5 :

Le vitrage représenté à la fig. 6 comporte comme aux exemples 1 et 4 : une feuille de verre extérieure 2 revêtu d'une couche conductrice 6, un intercalaire thermoplastique 12, et une feuille de verre intérieure 10. L'élément lumineux est réalisé par l'utilisation d'un film souple 26, par exemple en PET, sur lequel sont collées un ensemble de LED 8 constituées de leur enveloppe 22 encapsulant chacune une ou éventuellement plusieurs puces semi-conductrices 20. Une connexion électrique 28 est prévue sur le film 26, entre chaque enveloppe 22 et entre la dernière enveloppe et la couche conductrice (non représenté). Comme à l'exemple précédent, ce mode de réalisation permet de réaliser peu de pistes conductrices 6a, 6b et de réaliser des bandes 4 relativement larges, ce qui évite le fluage de la colle dans la bande 4. Le vitrage est réalisé en collant en une seule fois un ensemble de LED 8 pré-disposées sur le film 26.

### Exemple 6 :

La fig. 7 représente une feuille de verre trempée 30 sur laquelle une couche conductrice 32 est déposée. Sur la face intérieure de ce vitrage est collé un élément lumineux. L'exemple représenté à la fig. 7 montre un élément lumineux constitué d'une enveloppe 24 comportant un ensemble de puces semi-conductrices 20.

Bien entendu, l'invention ne se limite pas aux exemples illustrés, et d'autres combinaisons peuvent être imaginées par l'homme du métier sans sortir du cadre de l'invention. Par exemple, les LED de type « reverse » peuvent être réalisées avec une enveloppe multiple contenant plusieurs puces, etc, ...

Selon l'invention, il est donc possible d'obtenir un vitrage qui comporte un élément lumineux. Les LED ont l'avantage de ne consommer que très peu d'énergie et de ne dissiper pratiquement aucune chaleur. Il est envisageable de les disposer, non seulement au pourtour du vitrage mais également sur la partie centrale ou sur une grande partie de la surface vitrée sans pour autant entraver la visibilité, si le circuit de connexion est réalisé grâce des couches conductrices transparentes et si les LED et en particulier leur enveloppe sont choisies de manière appropriée en fonction de l'application recherchée.

Les LED sont généralement monochromatiques et sont disponibles dans toutes les teintes. En insérant un grand nombre de LED, un flux lumineux (de 30 à 500 lumens) équivalent à celui d'un éclairage incandescent peut être obtenu, tout en ne nécessitant qu'une consommation bien plus faible.

## Revendications

1. Vitrage automobile comportant un ou plusieurs substrats transparents et au moins un élément lumineux constitué de diodes électroluminescentes (LED) (8, 18).

2. Vitrage selon la revendication précédente, **caractérisé en ce que** le circuit de connexion est réalisé à l'aide d'une couche conductrice (6) déposée sur le substrat transparent (2, 10) dans laquelle des zones (6a, 6b, .. 6 e) ont été isolées du reste de la couche par de fines bandes isolantes (4).

3. Vitrage selon la revendication 2, **caractérisé en ce que** les fines bandes (4) ont des largeurs comprises entre 0.01 et 3 mm, de préférence comprise entre 0.05 et 1.5 mm, et de manière encore préférée entre 0.1 et 0.8 mm.

4. Vitrage selon l'une quelconque des revendications 2 à 3, **caractérisé en ce que** les fines bandes isolantes (4) sont réalisées dans la couche conductrice (6) à l'aide d'un laser.

5. Vitrage selon l'une quelconque des revendications 4 à 5, **caractérisé en ce que** la couche conductrice (6) et les zones isolées (6 a, 6b, ..) sont réalisées par masquage ou sérigraphie.

6. Vitrage selon l'une quelconque des revendications précédentes, caractérisé en ce les LED comportent plusieurs puces semi-conductrices (20) dans une enveloppe commune (24).

7. Vitrage selon la revendication précédente, **caractérisé en ce que** les dimensions de l'enveloppe 24 sont telles que sa largeur et/ou sa longueur sont au moins 10 fois plus grandes que son épaisseur, de préférence 20 fois plus grande et de manière encore préférée 40 fois plus grande.

8. Vitrage selon l'une quelconque des revendications 6 à 7, **caractérisé en ce que** l'enveloppe (24) présente une longueur et/ ou une largueur comprise entre 5 et 100 mm, de préférence entre 15 et 75 mm et de manière encore préférée entre 25 et 50 mm.

9. Vitrage selon l'une quelconque des revendications précédentes, **caractérisé en ce qu'**un interrupteur (40) actionnant l'alimentation de l'élément lumineux est constitué d'une zone de la couche conductrice (6) isolée du reste de la couche conductrice par de fines bandes (4).

10. Vitrage selon l'une quelconque des revendications précédentes, **caractérisé en ce qu'**il comporte deux substrats transparents (2, 10, 14) et un ou plusieurs intercalaires thermoplastiques (12), les LED (8, 18) et leur circuit de connexion étant insérés entre les deux substrats transparents.

11. Vitrage selon la revendication 10, **caractérisé en ce que** les LED (8, 18) ont une épaisseur inférieure ou égale à 3 mm, de manière préférée inférieure à 2 mm et de manière encore plus préférée une épaisseur comprise entre 0.1 et 1.2 mm.

12. Vitrage selon l'une quelconque des revendications précédentes, **caractérisé en ce qu'**il consiste est apte à procurer un éclairage intérieur de l'habitacle.
